Europäisches Patentamt

European Patent Office

Office européen des brevets

(19)

(11) Publication number: **0 312 519**
**A2**

# EUROPEAN PATENT APPLICATION

(12)

(21) Application number: **88870117.4**

(22) Date of filing: **06.07.88**

(51) Int. Cl.⁴: **A 23 B 4/14**

(30) Priority: **18.09.87 US 98446    29.04.88 US 182032
29.04.88 US 182031**

(43) Date of publication of application:
**19.04.89  Bulletin  89/16**

(84) Designated Contracting States:
**AT BE CH DE ES FR GB GR IT LI LU NL SE**

(71) Applicant: **MONSANTO COMPANY
Patent Department 800 North Lindbergh Boulevard
St. Louis, Missouri 63166  (US)**

(72) Inventor: **Ivey, Francis James
13031 Gallagher Road
Creve Coeur Missouri 63141  (US)**

**Hill, James Cameron
1 Doubletree
St. Louis Missouri 63131  (US)**

(74) Representative: **Lunt, John Cooper et al
Monsanto Europe S.A. Patent Department Avenue de
Tervuren 270-272 Letter Box No 1
B-1150 Brussels  (BE)**

(54) Control of bacteria on chicken carcasses.

(57)  This invention provides a means for control of Salmonella on meat-producing carcasses, e.g. poultry, during processing comprising contacting the carcass with an acidic solution of certain anionic sulfate or sulfonate surfactants.

EP 0 312 519 A2

**Description**

## CONTROL OF BACTERIA ON MEAT-PRODUCING CARCASSES

Background of the Invention

1. Field of the Invention.

This invention relates to the reduction of Salmonella, Camphylobacter or other skin attaching and colonizing bacteria on a meat-producing carcass. More particularly, this invention relates to the substantial reduction of Salmonella on a poultry carcass during the processing of freshly killed poultry.

The presence of Salmonella gives rise to a most serious problem in the food supply of humans. In the U.S. alone it has been reported that some two million cases of food poisoning in humans annually and some deaths may be attributable to Salmonella. While no one knows for sure how many cases of Salmonella infection in humans come from contaminated chickens, it is generally recognized that conventionally processed freshly killed chickens can be a source of Salmonella infection. In the chicken growing and processing industries chickens can become contaminated with Salmonella bacteria which thrive in the feed, water and litter of the chickens. Also, the pathogen may be transmitted to young chickens; but the infection may result in a long lasting resistance thereto within the chickens. It has been reported that as high as 35% of all chickens leave the processing plant contaminated with the bacteria. The high contamination rate persists despite much research effort over the past many years to control Salmonella contamination in chickens. Salmonella and Camphylobacter have the ability to attach to skin surfaces and thus are difficult to remove and kill.

2. Prior Art.

Various approaches have been used to reduce Salmonella contamination of poultry carcasses, such as disinfection of poultry feed and water to minimize infection of the flock with Salmonella organisms; vaccination of poultry to minimize infection of the flock; administration of antibiotics; and modification of the poultry slaughtering and processing procedures to kill existing Salmonella organisms on the carcass and flesh or to minimize cross-contamination from one carcass to another.

Various acids, such as acetic, adipic, succinic, lactic and other organic acids, have been suggested for addition to the scald tank. Chlorine has been added to the scald tank and to the chill tank. Heat treatment by raising the temperature of the scald tank and introduction of a hot water immersion of carcasses prior to the chill tank have been proposed. Treatment of carcasses with phosphate salts prior to the chill tank has been suggested. Glutaraldehyde has been proposed to treat carcasses in the prechill water. Various combinations of these treatments have also been suggested.

In addition to the treatments discussed above, "San Pel", a silicate-containing composition said to contain alkylbenzene sulfonate has been proposed for use in the scald tank to control bacterial contamination in chicken processing. Salmonella were not present in any of the tests. V. Papparella San Pel in Poultry Slaughtering, Industrie Alimentari, July-August 1979, pp. 541-42.

A way for interrupting the Salmonella infection chain in poultry at the hatching egg stage using certain disinfecting agents has been described by Mandl et al. in Arch. Geflugelk, 1987, 51(1), pp. 16-21, in an article entitled, "Efficiency of Different Methods to Disinfect Salmonella Contaminated Eggs". The researchers were concerned with the possible decrease in hatchability of the treated eggs resulting from the use of the disinfecting agents.

It has also been suggested that Salmonella-free chickens can be realized by a variety of procedures including genetic manipulation. While the use of ultrasonics alone may result in at least some reduction of the colonies of Salmonella on the birds, the Salmonella are not generally killed but tend to remain with the treated bird for subsequent infestation elsewhere or reinfestation of the same bird.

None of these known procedures have been commercially successful. Many of the acid treatments adversely affect the appearance of the carcass or render the skin easily bruised and damaged during the remainder of the processing procedure. The heat treatments often result in a carcass that has a partially cooked appearance. Some of the procedures have proven effective at minimizing cross-contamination from one carcass to another, but it has proven substantially more difficult to remove and kill Salmonella organisms that have become attached to or impregnated in the poultry skin or other parts of the carcass.

Despite all of these efforts, practical control of Salmonella contamination of poultry carcasses has proven to be extremely difficult. A number of factors are important in obtaining a practical method for control of Salmonella in poultry processing. The method must not unduly adversely affect appearance or processability of the carcass or the flavor of the meat. The method must not introduce undesirable substances into the food chain. Additionally, the method should preferably be easily integrated into the current poultry processing plants and should not be unduly costly.

## EP 0 312 519 A2

### SUMMARY OF THE INVENTION

The present invention provides a method of reducing contamination of bacteria, such as Salmonella and Camohylobacter, which are capable of attaching to and colonizing our meat surfaces, such as skin surfaces. The method comprises immersing a meat-producing carcass in an aqueous bath containing an effective antimicrobial substance thorugh which ultrasonic waves move. In another aspect, the present invention provides a method for controlling Salmonella and/or Camphylobacter during processing of a meat-producing carcass and, in particular, a fresh chicken carcass, comprising contacting the carcass for an effective amount of time with an aqueous solution at an acidic pH, preferably below about pH 4, more preferably below about pH 3 and even more preferably from about pH 1.5 to about pH 2.5 and at optionally the same time subjecting the carcass to ultrasonic energy treatment. The low pH of this solution is preferably achieved by addition of phosphoric acid. The aqueous solution preferably contains an effective amount of an anionic surfactant selected from the group consisting of a $C_8$-$C_{18}$ alkyl sulfate, a benzenesulfonic acid, preferably having one or more $C_1$-$C_{15}$ alkyl substituents and a naphthalenesulfonic acid, preferably having one or more $C_1$-$C_{15}$ alkyl substituents and water-soluble food-acceptable salts thereof, preferably lauryl sulfate, dodecylbenzenesulfonic acid, methylnaphthalenesulfonic acid and acceptable salts thereof. The surfactant is used in an effective amount to reduce Salmonella, preferably from about 50 to about 400 parts per million, by weight, more preferably from about 100 to about 300 ppm or less. It has also been found that other microbial agents, such as chlorine, acetic acid and the like, together with an ultrasonic energy treatment are likewise effective. The process is preferably conducted at temperatures from about 0 to about 60°C.

It has been found that the method of the present invention enhances the lethal removal of Salmonella prevalent on the skin of a chicken carcass. The chicken carcass is immersed in the acidic surfactant-containing aqueous solution having ultrasonic waves moving therein during the conventional multi-step processing of a freshly killed chicken. The immersion preferably takes place after the chicken has been scalded, defeathered and eviscerated but before the chicken is finally washed and chilled.

The present invention provides a method of reducing and killing Salmonella found on the skin of a chicken carcass, a source of Salmonella contamination affecting humans. The skin folds of a chicken affords an excellent environment for colonization of the Salmonella bacterial. These infection sites develop when the chicken is being grown for the food market. Conventional processing of freshly killed chickens having colonies of Salmonella attached to their skins simply has not satisfactorily reduced and killed such colonies of Salmonella. The present process is straight forward and can be conveniently incorporated in conventional chicken processing operations with very little additional equipment and processing costs. The time necessary for an antimicrobial substance to remove and kill the bacteria is reduced by the use of ultrasonics.

### Brief Description of the Drawings

Fig. 1 is a photomicrograph of a portion of an attached colony of Salmonella on a chicken skin taken using a scanning electron microscope.

Fig. 2 is a photomicrograph of a chicken skin from which a colony of Salmonella has been removed by the practice of the present invention.

Fig. 3 is a flow diagram of a method of processing freshly killed chickens which includes the sonication step of the present invention.

Fig. 4 is a schematic view of one form of apparatus useful for carrying out the sonication step of the present invention.

### Detailed Description of the Invention

An examination of chickens brought from growers to processing plants shows that many chickens are contaminated with attached colonies of Salmonella. The production oriented and cost containment environment in which the chickens are grown and processed in vast numbers may give rise to colonies of Salmonella being established and attached to the skin of the chickens. The normal processing of freshly killed chickens does not significantly reduce or destroy such colonies.

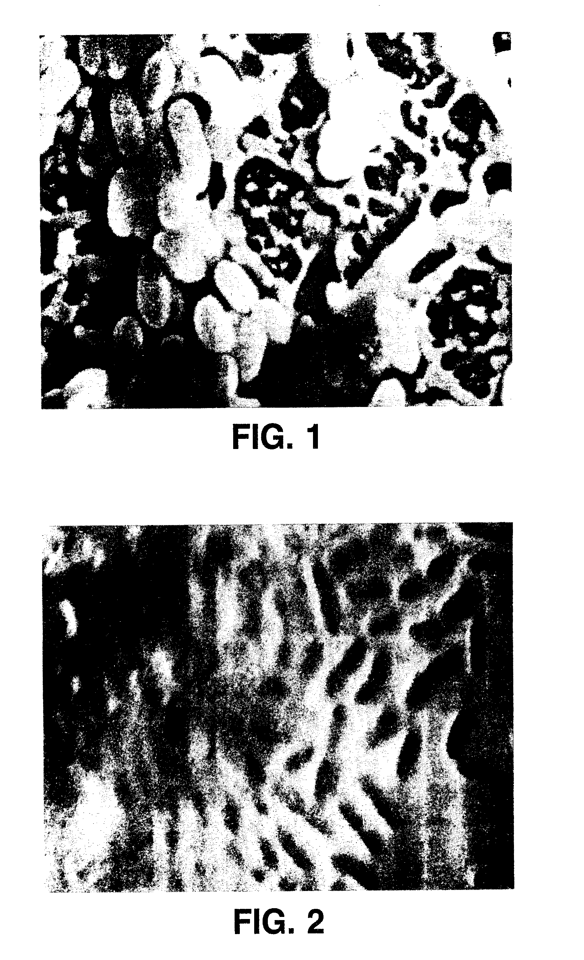

In Fig. 1 a photomicrograph of a section of a typical colony of Salmonella attached to the skin of a chicken is shown at 5000x magnification. Often chickens normally have such infections when they arrive at and leave the processing plants.

In Fig. 2 a photomicrograph of a section of chicken skin from which a colony of Salmonella has been detached in accordance with the present invention is shown at 5000x magnification. The crater-like features of the skin appear to be locations where the colonies were most deeply embedded in the skin prior to the decolonization by the practice of the present invention.

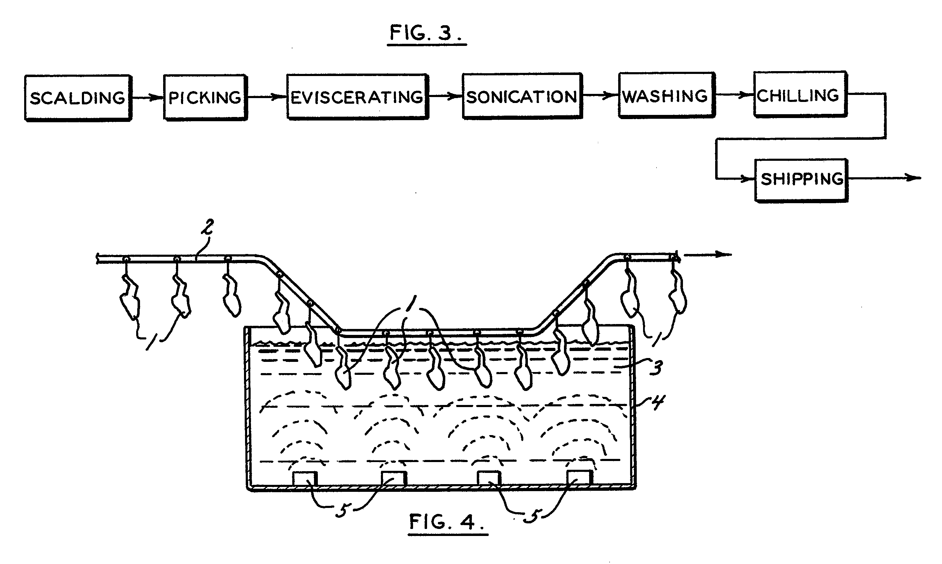

In Fig. 3 a conventional step-wise procedure for processing freshly killed chickens is shown to which the sonication step of the present invention has been included. After being killed, it is often standard practice to

3

first scald the chicken after which the feathers of the chicken are removed by a plucking operation. After removal of the feathers, the chickens are eviscerated to remove the entrails and internal organs of the chickens. After being disemboweled, the chickens are conventionally washed, chilled and packaged for shipping to the consumers. In accordance with the present invention, the chickens after they have been defeathered and eviscerated are immersed in an aqueous sonication acid bath containing effective antimicrobial agents, such as the described anionic surfactants, prior to washing, chilling and shipping. The immersion is preferably accomplished by moving the chickens one after another in a continuous fashion into, through and from the sonication bath.

The continuous moving of a plurality of chickens through a sonication bath is illustrated in Fig. 4, wherein plucked eviscerated chickens 1 are moved one after another along an overhead conveyance track 2. The chickens are immersed in an aqueous bath 3 contained in a tank 4. A plurality of ultrasonic devices 5 of conventional construction are associated with the tank to cause the generation of and transmission of ultrasonic energy into contact with the chickens being processed in the aqueous bath. The ultrasonic devices may be deposed on the inside or outside of the tank. Often it is preferred to employ opposed arrays of such devices between which the carcasses pass when greater ultrasonic energy is needed.

Although a low pH of the treating is not critical when the antimicrobial agent is chlorine, acetic acid, or the like, the ultrasonic energized bath containing an effective anionic surfactant through which the chickens are passed preferably has a pH below about 4. At higher pH's the decolonization and killing of Salmonella from the skin of the chicken may not be lowered to a satisfactory low level. The bath contains an effective amount of an anionic surfactant of a particular type. The preferred anionic surfactant is one selected from the group consisting of a $C_8$-$C_{18}$ alkyl sulfate, an alkyl substituted benzenesulfonic acid and an alkyl substituted naphthalenesulfonic acid. Preferably, the aromatic moieties of the sulfonic acids have at least one $C_1$-$C_{15}$ alkyl substituent which may be straight or branched chains. Food acceptable salts of such sulfates and sulfonic acids are also effective. The most preferred surfactants are the more water soluble salts, such as the sodium salt of lauryl sulfate and the sodium salt of dodecylbenzenesulfonic acid. The acidity of the treating bath is maintained by the addition of mineral or organic acids, such as phosphoric acid and acetic acid. The most preferred acid is phosphoric acid.

This invention is useful for controlling Salmonella contamination on any meat-producing carcasses, including pork, beef, chickens, turkeys, ducks, geese, and other commercial meat carcasses, including the edible viscera of these birds. For the sake of convenience, and because poultry represents the more difficult control problem and because chickens comprise the largest portion of the poultry market, the present invention will be referred to primarily in terms of processing of chickens. However, one skilled the art will understand that the discussion is applicable to other poultry and to other meat-producing carcasses as well.

As indicated above, poultry processing begins with slaughtering of the chicken. Conventionally, the carcass is then immersed in a scald tank, which is typically maintained at a temperature from about 50 to about 60°C; and the carcass is maintained in the scald tank from about $\frac{1}{2}$ minute to about $2\frac{1}{2}$ minutes. After being removed from the scald tank, the carcass is plucked, eviscerated and cleaned. During these procedures, water is sprayed on the carcass to remove debris. The carcass is then taken to the chill tank, where the carcass is immersed in water from about 0 to about 16°C, preferably from about 0 to about 10°C, from about 15 to about 120 minutes, preferably from about 40 to about 120 minutes.

The present invention can best be practiced as a separate treatment step after the chickens are defeathered and eviscerated and before final washing and chilling. The presence of the surfactant may sometimes result in some foaming. For this reason, if it is desired to practice the present invention in a bath, it is preferred that the invention be conducted to minimize foaming, e.g. by use of lower concentrations of surfactant, of less vigorous movement of the aqueous bath, or by other techniques known to one skilled in the art. The treatment may be conducted at elevated temperatures. Less time is normally required when elevated temperatures are used. The elevated temperatures should not be so high as to unduly adversely affect the appearance of the carcass. Preferred temperatures for an elevated temperature treatment are from about 45 to about 60°C for from a few seconds to about 10 minutes, more preferably from about 50 to about 52°C or even up to about 56°C for from about 1 to about 3 minutes. The treatment can also be conducted at ambient or reduced temperatures, for an appropriate period of time.

This invention involves contacting the carcass with an acidic aqueous solution containing an anionic sulfate or sulfonic acid surfactant or suitable salts thereof as described above. The pH of the solution can be attained by addition of the appropriate amount of any acid, provided that it does not interfere with activity of the surfactant or adversely affect the appearance or taste of the chicken to the point that it reduces its marketability to an undesired extent. Preferred acids include acetic acid, lactic acid and phosphoric acid, with phosphoric acid being particularly preferred.

Preferred surfactants include alkyl sulfates and alkylbenzenesulfonic acid, particularly lauryl sulfate and dodecylbenzenesulfonic acid. Typically the surfactant contains a range of alkyl groups with the name designating the length of the alkyl group being derived from the average length of the alkyl group. As an example the lauryl and the dodecyl groups referred to herein have an average of about 12 carbon atoms. The length and branching or lack of branching of the alkyl chain can vary without substantial loss of activity. Since the process of this invention is preferably carried out under acidic conditions and often under strongly acidic conditions, the surfactants of this invention can be added either in acid form or as a salt. In either event, the active form of the surfactant will be determined by the pH of the solution. Because of their commercial availability, the most preferred surfactants are sodium lauryl sulfate (SLS) and dodecylbenzenesulfonic acid (DDBSA).

The optimum concentration for the surfactant can be determined by routine experimentation. There is some indication that as concentration of DDBSA increases, activity of the surfactant increases until a maximum is reached, from there on activity diminishes with increased concentration. See Example 1 below. The degree of this effect at different conditions and whether it occurs at different conditions or with different surfactants can also be determined by routine experimentation.

The carcass is contacted with the aqueous solution for an amount of time and at an ultrasonic energy level effective to provide reduction of Salmonella. The present process not only provides for control of cross-contamination from one carcass to another, but also provides for control of Salmonella organisms on the carcass as well. The carcass is maintained in contact with the aqueous solution and ultrasonic energy for a period of time sufficient to achieve the desired degree of control. This amount of time is dependent upon a number of factors which would be apparent to one skilled in the art, such as temperature of the solution, the energy level of the ultrasonic vibrations, and a number of other factors. Often it is not necessary to modify the processing procedure to allow sufficient contact time between the carcass and the energized aqueous solution. This is particularly true where the aqueous solution is used in the scald and/or chill tanks.

In addition to the antimicrobial agent, the energized aqueous solution of this invention may also optionally contain additional additives, such as sorbic acid, salts of sorbic acid, propylene glycol, etc.

The following examples further illustrate this invention, and are not intended to in any way limit its scope. Unless otherwise specified, throughout the specification and claims, all temperatures are centigrade and all concentrations and parts are by weight.

## EXAMPLE 1

Commercially available chicken wings were used to study the effect of various treatments to control Salmonella. Some of the wings were used as obtained and some were inoculated with Salmonella typhimurium by dipping the wings in an aqueous suspension containing about $1x \ 10^4$ organisms per ml and draining the wings for about 1 hour. For each experiment 8 test wings were immersed in test solutions containing indicated amounts of dodecylbenzene sulfonic acid (DDBSA) or sodium lauryl sulfate for $2\frac{1}{2}$ minutes at about 52°C. The treated wings were tested for Salmonella by rinsing the wing in a lactose broth. The wing was removed from the broth and discarded. The broth was incubated at about 35°C for about 24 hours. One ml aliquots of this broth were incubated for 24 hours in a selinite-cystine broth or a tetrathionate broth to selectively grow Salmonella and related organisms. This incubated broth was streaked onto plates containing either bismuth sulfite agar or Salmonella-Shigella agar, which are also selective for Salmonella. After incubation, the plates were examined for Salmonella colonies. Any existing colonies were tested to confirm that they were Salmonella. The results are reported in Table I.

TABLE I

| Surfactant | Surf. Conc. | Acid/Base | Acid/Base Conc. | pH | Inocu-lated % Positive | Uninocu-lated % Positive |
|---|---|---|---|---|---|---|
| none | -- | none | -- | 7 | 87% | 67% |
| DDBSA | 50ppm | none | -- | 7 | 75% | 50% |
| DDBSA | 100ppm | none | -- | 7 | 17% | 17% |
| DDBSA | 400ppm | none | -- | 7 | 92% | 50% |
| none | -- | Acetic | 0.5% | 2.8 | 67% | 67% |
| none | -- | NaOH | -- | 9.0 | 58% | 25% |
| DDBSA | 50ppm | $H_3PO_4$ | .05% | 2.5 | 42% | 67% |
| DDBSA | 100ppm | $H_3PO_4$ | .05% | 2.5 | -- | 33% |
| DDBSA | 50ppm | Acetic | .05% | 3.3 | 70% | 50% |
| DDBSA | 100ppm | Acetic | .05% | 3.3 | 50% | 33% |

## EXAMPLE 2

A series of experiments was conducted in which commercial chicken wings were immersed in test solutions, some at 53°C and some at 18°C for varying amounts of time. Each experiment used 8 wings. Some experiments used wings that had been inoculated as described in Example 1. The wings were tested for Salmonella as described in Example 1. The percentage of the wings that tested positive is shown in Table II.

TABLE II

| Temperature | Time | Inoculated | Treatment Solution % Positive | | | | |
| --- | --- | --- | --- | --- | --- | --- | --- |
| | | | Control | A | B | C | D |
| 53°C | 2.5 min | yes | 62 | 25 | -- | 37 | 25 |
| 53°C | 2.5 min | no | 75 | 37 | -- | 75 | 25 |
| 53°C | 2.5 min | yes | 100 | 37 | -- | -- | -- |
| 53°C | 2.5 min | no | 100 | 62 | -- | -- | -- |
| 18°C | 120 min | no | 100 | 50 | -- | 75 | -- |
| 18°C | 120 min | no | 87 | 50 | -- | -- | -- |
| 18°C | 120 min | no | 87 | -- | 50 | -- | -- |
| 18°C | 60 min | no | 87 | 12 | 12 | -- | -- |
| 18°C | 15 min | no | 87 | 37 | 37 | -- | -- |
| 18°C | 15 min | no | 87 | 62 | 87 | -- | -- |
| 18°C | 5 min | no | 100 | 37 | 100 | -- | -- |
| 18°C | 1 min | no | 100 | 100 | 50 | -- | -- |
| 18°C | 1 min | no | 87 | 100 | 100 | -- | -- |

Treatment A is 200 ppm DDBSA, 1200 ppm $H_3PO_4$, pH ~ 2

Treatment B is 200 ppm SLS, 1200 ppm $H_3PO_4$, pH ~ 2

Treatment C is 1% acetic acid, pH2-2.5

Treatment D is NaOH, pH10


## EXAMPLE 3

Two series of experiments were conducted as in Example I at 18°C for 1 hour, to determine the effect of pH. Eight uninoculated wings were used in each run. Two hundred ppm of the indicated surfactant was used with sufficient phosphoric acid added to reach the indicated pH. The percentage of wings that tested positive is shown in Table III.

TABLE III

| Surfactant | pH | % Positive |
| --- | --- | --- |
| none | neutral | 100% |
| DDBSA | 4.0 | 87% |
| DDBSA | 3.0 | 100% |
| DDBSA | 2.5 | 50% |
| DDBSA | 2.0 | 0% |
| SLS | 4.0 | 87% |
| SLS | 3.0 | 87% |
| SLS | 2.5 | 37% |
| SLS | 2.0 | 12% |
| none | 2.0 | 50% |


## EXAMPLE 4

A series of experiments was conducted as in Example 1 at 18°C for 1 hour to determine the effect of concentration of SLS at pH 2.3 in a phosphoric acid solution. Eight uninoculated wings were used for each experiment. The percentage of wings that tested positive is shown in Table IV.

TABLE IV

| SLS Conc. | % Positive |
|---|---|
| 0 (neutral pH) | 100% |
| 25 ppm | 87% |
| 50 ppm | 87% |
| 100 ppm | 62% |
| 200 ppm | 37% |
| 300 ppm | 37% |
| 400 ppm | 75% |
| 0 | 75% |

## EXAMPLE 5

A series of experiments as described in Example 1 was done with other surfactants to determine their effectiveness. The surfactants were all used at 200 ppm with 1200 ppm phosphoric acid (pH 2.3). The results are shown in Table V.

TABLE V

| Surfactant | % Positive |
|---|---|
| Control (none) | 75% |
| Polyoxy Ethylene 23 Lauryl Ether[1] | 75% |
| Polyoxy Ethylene 20 Stearyl Ether[2] | 75% |
| Polyoxy Ethylene Sorbitan Monooleate[3] | 75% |
| Polyoxy Ethylene Sorbitan Monolaurate[4] | 75% |
| Polyoxy Ethylene Sorbitan Monostearate[5] | 75% |
| Dioctyl Sodium Sulfosuccinate[6] | 62% |
| Sodium Lauryl Sulfate | 37% |

1. sold by ICI Americas, Inc. under the tradename Brij 35
2. sold by ICI Americas, Inc. under the tradename Brij 78
3. sold by ICI Americas, Inc. under the tradename Tween 80
4. sold by ICI Americas, Inc. under the tradename Tween 20
5. sold by ICI Americas, Inc. under the tradename Tween 60
6. sold by American Cyanamide Co. under the trade name Aerosol OT (75% soln)

## EXAMPLE 6

A series of experiments was conducted as in Example 5 to evaluate other surfactants. The Salmonella reduction procedure was as in Example 1. The results are in Table VI.

TABLE VI

| Surfactant | % Positive |
|---|---|
| Octylphenoxy Polyethoxy Ethanol[1] | 100% |
| Sorbitan Monostearate (400 ppm)[2] | 75% |
| Dodecylbenzene Sulfonic Acid | 37% |
| Oleic Acid | 100% |

1. sold by Rohm and Haas Co. under the tradename Triton X-15
2. sold by ICI Americas, Inc. under the tradename Span 60

## EXAMPLE 7

A series of experiments was done to simulate commercial poultry processing. The birds were inoculated with Salmonella cholerae-suis by oral dosing in drinking water 4 days and 2 days prior to slaught-er. This procedure produced very highly contaminated birds. The carcasses were processed in groups of 6, according to the following procedure. The birds were hung in shackles, stunned, bled, and immersed in a scald tank at about 52°C for $2\frac{1}{2}$ minutes. The carcasses were picked on a rotating picker, rehung and eviscerated. The eviscerated carcasses were placed in a 15 gallon (56.8 liters) iced chill tank at 0°C for one hour. The scald tank and the chiller were modified by addition of the indicated additives. Some of the runs also used a potassium sorbate additive (KS). Twelve carcasses were processed under each of the indicated conditions. The carcasses were evaluated for Salmonella contamination by individually shaking each carcass in a bag with 100 ml of sterile water containing an aqueous solution of 0.6% sodium heptadecyl sulfate sold by Union Carbide Corporation under the tradename Tergitol Anionic 7. The carcass was discarded and the water solution was diluted with selinite-crysteine broth resulting in a normal concentration of broth. The broth was incubated for 24 hrs. at 35°C and streaked onto three selective media, Bismuth Sulfite Agar, Hektoen Enteric Agar and Salmonella Shigella Agar. Any resulting colonies were transferred to beef heart infusion agar then to lysine iron agar and held for serotyping. The treatments and results are shown in Table VII.

TABLE VII

| Scald Tank Treatment | Chiller Treatment | % Positive |
|---|---|---|
| 1. No treatment | No treatment | 50% |
| 2. No treatment | 100 ppm Chlorine | 8% |
| 3. No treatment | 200 ppm DDBS 1200 ppm $H_3PO_4$, pH ~2.3 1200 ppm KS* | 25% |
| 4. No treatment | 200 ppm DDBS 1200 ppm $H_3PO_4$, pH ~2.3 | 0% |
| 5. No treatment | 200 ppm SLS, 1200 ppm $H_3PO_4$, pH ~2.3 1200 ppm KS* | 8% |
| 6. No treatment | 200 ppm SLS, | 33% |
| 7. 1% Lactic Acid, pH ~2.2 | 1% Lactic Acid, pH ~2.2 | 0% |
| 8. 200 ppm DDBSA | No treatment | 100% |
| 9. 200 ppm DDBSA, 1200 ppm $H_3PO_4$, pH ~2.3 | No treatment | 67% |
| 10. 200 ppm DDBSA, 1200 ppm $H_3PO_4$, pH ~2.3 | 200 ppm SLS | 58% |
| 11. NaOH, pH 10.5 | No treatment | 58% |
| 12. 1% Acetic Acid, pH ~3.0 | No treatment | 82% |
| 13. 200 ppm SLS | No treatment | 91% |
| 14. 200 ppm SLS, 1200 ppm $H_3PO_4$, pH ~2.3 | No treatment | 0% |
| 15. 200 ppm SLS, 1200 ppm $H_3PO_4$, pH ~2.3 | 200 ppm SLS | 0% |
| 16. 200 ppm, SLS, 1% Lactic Acid, pH ~2.2 | No treatment | 17% |

* KS treatment was done in additional 1 hour soak under chiller conditions.

The scald tank treatments with 1% lactic acid and 1% acetic acid were considered unsatisfactory because they resulted in a carcass with dry, fragile, easily split skin with a "bark-like" appearance.

EXAMPLE 8

9

A series of experiments were conducted on uninoculated commercially available chicken wings to simulate scald tank treatment and chiller treatment. The simulated scald tank was maintained at 52°C and the wings were immersed for $2\frac{1}{2}$ minutes and the chiller was at about 15°C for 60 minutes. The wings were removed from the chiller and each wing was immediately shaken for 1 minute with 50 ml of water containing 0.6% Tergitol Anionic 7. The wing was discarded and 5 ml of selinite cystine broth was added resulting in a normal broth. After incubation at 35°C for 24 hours, the broth was streaked on Salmonella and Shigella agar. Apparent positive colonies were biochemically confirmed as Salmonella. The results are shown in Table VIII.

TABLE VIII

| Scald Tank Treatment | Chiller Treatment | % Positive |
|---|---|---|
| 1. No treatment | No treatment | 87% |
| 2. No treatment | 1% Lactic Acid, pH ~2.3 | 0% |
| 3. No treatment | 0.5% Lactic Acid, pH ~2.5 | 37% |
| 4. No treatment | 0.1% Lactic Acid, pH ~3.0 | 75% |
| 5. No treatment | 200 ppm SLS, 0.5% Lactic Acid, pH ~2.5 | 25% |
| 6. No treatment | 200 ppm SLS, 0.1% Lactic Acid, pH ~2.9 | 100% |
| 7. No treatment | 1% Acetic Acid, pH ~2.8 | 0% |
| 8. No treatment | 0.5% Acetic Acid, pH ~3.0 | 37% |
| 9. No treatment | 200 ppm DDBSA, 1200 ppm $H_3PO_4$, pH ~2.3 | 75% |
| 10. No treatment | 200 ppm SLS, 0.1% Lactic Acid, adjusted to pH ~2.0 with $H_3PO_4$ | 12% |
| 11. No treatment | 200 ppm SLS, 1200 ppm $H_3PO_4$, pH ~2.3 | 50% |
| 12. 200 ppm SLS, 1200 ppm $H_3PO_4$, ~2.3 | 200 ppm SLS, 1200 ppm $H_3PO_4$, pH ~2.3 | 0% |

EXAMPLE 9

A series of experiments was conducted on uninoculated chicken wings, simulating scald tank treatment. The simulated scald tank was maintained at 52°C and the wings were immersed for $2\frac{1}{2}$ minutes. The test solution contained 200 ppm of the indicated surfactant and 1200 ppm of phosphoric acid at a pH of about 2.3. Salmonella recovery was done as described in Example 7, with Shigella and Salmonella agar used for streaking the selinite cystine broth. The results are shown in Table IX.

TABLE IX

| Surfactant | % Positive |
|---|---|
| none | 87.5% |
| Methylnaphthalenesul-fonic Acid[1] | 62.5% |
| Methylnaphthalenesul-fonic Acid[2] | 75.0% |
| Sodium Lauryl Sulfate | 37.5% |

[1] Sold by Desoto, Inc. under the tradename Petro ULF (50% active).
[2] Sold by Henkel, Inc. under the tradename Sellogen NS 50 (50% active).

EXAMPLE 10

This example and the examples which follow illustrate that the use of antimicrobial agents along with sonication enhances the activity of the antimicrobial agents in terms of reducing the time of treatment necessary for killing the bacteria at given temperatures. Uninoculated, commercially available chicken wings were immersed in cold (18°C) water for 3 minutes. Some wings were subjected to sonic treatment with a Branson Ultrasonic Cleaner (200 watts of power at 55 kHz) for the indicated time and the indicated amount of SLS was added to the water along with 1200 ppm of phosphoric acid resulting in a pH ~2.3. The wings were removed and tested for Salmonella contamination as in Example 8. The results of two sets of runs are summarized in Table X.

TABLE X

|  | Surfactant | Sonication Time (min.) | % Positive |
|---|---|---|---|
| Set A | 0 (no acid) | 0 | 57% |
|  | 0 (no acid) | 3 | 50% |
|  | 200 ppm SLS | 0 | 75% |
|  | 200 ppm SLS | 3 | 0 |
| Set B | 0 (no acid) | 0 | 87.5% |
|  | 0 (no acid) | 3 | 87.5% |
|  | 0 (with acid) | 0 | 87.5% |
|  | 0 (with acid) | 3 | 75% |
|  | 200 ppm SLS (no acid) | 0 | 75% |
|  | 200 ppm SLS (no acid) | 3 | 87.5% |
|  | 200 ppm SLS | 0 | 50% |
|  | 200 ppm SLS | 14 sec. | 12.5% |
|  | 200 ppm SLS | 1 | 12.5% |
|  | 200 ppm SLS | 2 | 12.5% |
|  | 200 ppm SLS | 3 | 50% |
|  | 200 ppm SLS | 3 | 37.5% |
|  | 50 ppm SLS | 3 | 50% |
|  | 100 ppm SLS | 3 | 37.5% |
|  | 400 ppm SLS | 3 | 37.5% |

Example 11

In this example the use of a sonication bath containing a small amount of moderately effective antimicrobial substance including chlorine and acetic acid and the use of a bath containing a small amount of the same substances but without sonication are illustrated. A number of commercially available chicken wings were obtained. An examination of the wings revealed that they had been colonized by Salmonella. Eight wings showing Salmonella contaminations were immersed for a period of one minute in a plain four liter water bath maintained at 18°C. In the bath, the wings were subjected to sonic treatment with a Branson Ultrasonic Cleaner having a power rating of 200 watts at 55 kHz. An examination of the treated chicken wings revealed that seven out of eight were contaminated with Salmonella. The same test was repeated except that in one instance the immersion time of the wings in the aqueous sonication bath was increased to five minutes and that in another instance the immersion time of the wings in the aqueous sonication bath was increased to fifteen minutes. After the five minute treatment, six of the eight wings remained contaminated with Salmonella. After the fifteen minute treatment, five of the eight wings remained contaminated with Salmonella.

To the sonication bath was added 100 ppm of chlorine. After immersion of eight wings contaminated with Salmonella for one minute all of the wings were contaminated. But after immersion of eight wings in a sonication bath for five minutes to which 100 ppm of chlorine had been added, only one wing showed contamination. In another test eight chicken wings whose skins were contaminated with Salmonella were immersed in the sonication bath containing 100 ppm of chlorine for a period of fifteen minutes. It was found that of these treated wings five wings were free of Salmonella contamination. In another test eight chicken wings whose skins were contaminated with Salmonella were immersed in a four liter aqueous bath containing 100 ppm of chlorine but having no ultrasonic energy. It was found that of these treated wings all eight were still contaminated with Salmonella. This example shows that an aqueous bath having a small amount of chlorine and having ultrasonic waves moving therethrough will effectively reduce the contamination of Salmonella on the skin of chickens in a time period wherein the use of chlorine alone (no sonication) does not effectively reduce such contamination.

A 0.25% acetic acid solution was prepared and used as a bath for treating chickens contaminated with Salmonella. Again, eight wings per treatment were employed. In the first treatment, the wings were immersed in the bath for 15 minutes; and it was found that four of the eight wings were contaminated. In the second treatment, the first treatment was repeated with ultrasonics being applied during three minutes of immersion; and it was found that one of the eight wings was contaminated. In the third treatment, the second treatment was repeated with ultrasonics being applied during five minutes of immersion; and it was found that none of the eight wings were contaminated. This example shows that an aqueous bath having a small amount of acetic acid and having ultrasonic waves moving therethrough will effectively reduce the contamination of Salmonella on the skin of chickens in a time period wherein the use of acetic acid alone (no sonication) does not effectively reduce such contamination.

Example 12

In this example the use of a sonication bath containing a small amount of dioctyl sodium sulfosuccinate and made acidic to a pH of 2.3 by the addition of a small amount of phosphoric acid at different time levels and the use of such bath without sonication are shown. An aqueous sonication bath containing 200 ppm dioctyl sodium sulfosuccinate and 1200 ppm phosphoric acid was prepared. Eight chicken wings, each of which showed Salmonella contamination, were immersed for fifteen minutes in the bath without sonication being utilized. An examination of the skins of treated wings revealed that six out of the eight wings were still contaminated. In another test eight chicken wings, whose skins were contaminated with Salmonella, were immersed in a bath of the same composition but having been energized with ultrasonic energy. After one minute of treatment six wings were still contaminated; after five minutes of treatment four wings were still contaminated; and after fifteen minutes of treatment six wings were still contaminated. This example shows that an anionic surfactant which does not fall within the type of anionic surfactants of the present invention is less effective even when combined with sonication.

EXAMPLE 13

In this example, a series of experiments was conducted using 20 cornish game hen carcasses per experiment and using a four liter tank having a plurality of bottom-mounted 5000 watt transducers. The tank contained water or an aqueous solution of 200 ppm sodium lauryl sulfate and 1200 ppm phosphoric acid. It was found that with no treatment 65% of the birds was infected with Salmonella. In the first experiment, water with ultrasonic being applied was used at room temperature for 60 seconds. After this treatment, 55% of the treated carcasses was found to be infected with Salmonella. When the aqueous bath contained the sulfate and acid and ultrasonics were applied at 35°C for 60 seconds, the percent Salmonella contamination was reduced to 0%. 100% removal of Salmonella was also accomplished when the aqueous bath contained the sulfate and acid and ultrasonics were applied at 43°C.

In other experiments, two 1000 watt ultrasonic units were dropped into the aqueous bath in vertical opposing positions. The treated carcasses were placed between the units. The bottom mounted units were not activated during the experiment. The aqueous bath contained 200 ppm sodium lauryl sulfate and 1200 ppm phosphoric acid. When ultrasonics were applied at 24°C for 60 seconds, the level of Salmonella was reduced to 10%. When ultrasonics were applied at 43°C for 60 seconds, the level of Salmonella was reduced to 0%.

EXAMPLE 14

In this experiment, a suitable number of chickens at six weeks of age were placed in pens containing rice hull litter. The birds were inoculated twice in the drinking water with approximately $10^6$/ml of Camphylobacter jejunum. The contaminated water was given to the chickens two and four days before slaughtering. The chickens exhibited mild systems of disease but no mortality. The chickens were shackeled, stunned, bled and scalded at 52°C for 40 seconds. The carcasses were picked on a rotating picker, rehung and hand eviscerated. After a gentle spray wash, different groups of the carcasses were subjected to ten separate treatments using twelve birds per treatment. The treated carcasses were then immersed in ice water for one hour.

The Salmonella count was determined by the method set forth above in Example 7. The Camphylobacter count was determined in accordance with the method of A. Cuff et al., Journal of Food Protection,

13

45:1276-1278 (1982). Half of the recovered rinse from each chicken carcass was diluted with concentrated Brucella-FBP-am raw to give a normal concentration in the final broth. This broth was held at 5°C for 12-24 hours and then incubated at 42°C for 48 hours in an atmosphere of 5% $O_2$:10% $CO_2$:85% $N_2$ in an ANEE system. A loop full of the contents of each tube was then streaked onto Brucella-Camphylobacter agar plates. The plates were incubated at 42°C for 48 hours in the ANEE system in the same atmosphere. When needed, identity of colonies on the plates was confirmed by tests described by Blaser et al. in Ann. Intern. Med., 91:179-185 (1979). These tests included gram reaction and morphology, oxidase reaction, catalyase reaction, motility $H_2S$ production, resistance to nalidixic acid, growth in 1% glycine and growth in brucella broth at 25°C and 42°C.

There were two controls run, one as the first treatment (Treatment 1) and one as the last treatment (Treatment 10). In the controls, neither the acidic aqueous bath containing an effective surfactant nor the application of ultrasonics was employed. Treatments 2-5 involved the use of the antimicrobial aqueous solution containing 1200 ppm phosphoric acid and 200 ppm sodium lauryl sulfate. In Treatment 2, the chickens were submerged in the antimicrobial solution after evisceration and before the chilling step in the tank with 15 seconds of sonication. Treatment 3 was the same as Treatment 2, but sonication was extended to 60 seconds. Treatment 4 involved the treatment of Treatment 1 in a chill tank. Treatment 5 was the same as Treatment 2, but the temperature of the solution was 38°C. Treatment 6 was the same as Treatment 2, but sonication and the use of the solution were carried during scalding. Treatment 7 was the same as Treatment 2, but sonication and the use of the solution were carried out in both the scald and chill steps. Treatment 8 was the application of the solution on the chickens during the scald and with a subsequent 15 second sonication in water. Treatment 9 involved a 60 second sonication in water without the use of the antimicrobial material of the present invention. The results of these ten treatments are listed below in Table XI.

### TABLE XI

| Treatment No. | Salmonella No. Positives/12 | Camphylobacter No. Positives/12 |
|---|---|---|
| 1 | 9/12 | 2/12 |
| 2 | 5/12 | 0/12 |
| 3 | 3/12 | 0/12 |
| 4 | 3/12 | 0/12 |
| 5 | 0/12 | 1/12 |
| 6 | 1/12 | 1/12 |
| 7 | 0/12 | 0/12 |
| 8 | 0/12 | 0/12 |
| 9 | 5/12 | 0/12 |
| 10 | 8/12 | 2/12 |

As can be seen from above, the application of an acid aqueous solution containing the surfactants of the present invention results in an effective reduction of Salmonella and Camphylobacter on the surface of poultry carcasses. Antimicrobial solutions can either be applied in a scald, chill or ultrasonic treatment with resultant reductions in the incidence of both of these pathogens. The preferred treatment is the application of ultrasonics in combination with an antimicrobial solution of the present invention.

### EXAMPLE 15

In a similar manner as described in Example 13, eight lots each comprising twelve chickens were inoculated with Listeria monocylogenes. Various aqueous solutions with and without sonication were tested to determine the effectiveness of controlling Listeria in chickens which had been freshly killed, scalded, plucked, eviscerated and lightly water washed. Treatment 1 involved no sonication but involved the immersion of the chickens for 60 seconds in an aqueous solution containing 200 ppm sodium lauryl sulfate and 1200 ppm phosphoric acid. Treatment 2 involved 60 seconds of sonication and the simultaneous use of an aqueous solution containing 1200 ppm phosphoric acid. Treatment 3 involved 60 seconds of sonication and the simultaneous use of an aqueous solution containing 200 ppm sodium lauryl sulfate. Treatment 4 involved 60 seconds of sonication and the simultaneous use of an aqueous solution containing 1200 ppm phosphoric acid and 200 ppm sodium lauryl sulfate. Treatment 5 was the same as Treatment 4 but with only 15 seconds of sonication. Treatment 6 was the same as Treatment 4 but with only 30 seconds of sonication. Treatment 7 involved 60 seconds of sonication and the simultaneous use of 25 ppm chlorine dioxide. Treatment 8 involved 60 second sonication in water without any antimicrobial agent. The results of these treatments are set forth in Table XII below.

TABLE XII

| Treatment No. | Average % Reduction |
|---|---|
| 1 | 91 |
| 2 | 61 |
| 3 | 29 |
| 4 | 74 |
| 5 | 49 |
| 6 | 69 |
| 7 | 86 |
| 8 | 31 |

Treatments 1 and 7 were most effective with average reductions of 91 and 86 percent, respectively. Treatments 2, 4 and 6 were somewhat less effective. Treatments 3 and 8 showed even less effect. These results indicate that the chlorine dioxide solution and the solution of phosphoric acid and sodium lauryl sulfate are effective against Listeria. The use of ultrasonics did not show a clear effect. This observation may be attributable to Listeria's reduced ability to attach to skin as Salmonella attaches. In addition to the examples above which illustrate the present invention, one skilled in the art will recognize a number of variations and alternatives within the scope of the present invention.

**Claims**

1. A method for controlling Salmonella during processing of a meat-producing carcass comprising contacting the carcass for an effective amount of time with an aqueous solution at an acid pH comprising an effective amount of a surfactant selected from the group consisting of a $C_8$-$C_{18}$ alkyl sulfate, a $C_1$-$C_{15}$ alkylbenzenesulfonic acid, a $C_1$-$C_{15}$ alkylnaphthalenesulfonic acid and salts thereof.

2. The method of Claim 1 wherein the aqueous solution contains phosphoric acid.

3. The method of Claim 1 wherein the meat-producing carcass is a poultry carcass.

4. A method of controlling Salmonella during processing of a poultry carcass comprising contacting the carcass for an effective amount of time with an aqueous solution at a pH below about 4 and at a temperature from about 0 to about 60°C, said solution comprising phosphoric acid and from 50 to about 400 parts per million of a surfactant selected from the group consisting of a $C_8$-$C_{18}$ alkyl sulfate, a benzenesulfonic acid having at least one $C_1$-$C_{15}$ alkyl substituent, a naphthalenesulfonic acid having at least one $C_1$-$C_{15}$ substituent and salts thereof.

5. A method for controlling Salmonella during processing of a meat-producing carcass comprising contacting the carcass for an effective amount of time with an aqueous solution at an acid pH comprising an effective amount of a surfactant selected from the group consisting of lauryl sulfate, dodecylbenzene sulfonic acid, a methyl naphthalene sulfonic acid and salts thereof.

6. The method of Claim 5 wherein the surfactant is lauryl sulfate or salts thereof.

7. The method of Claim 5 wherein the surfactant is dodecylbenzene sulfonic acid or salts thereof.

8. The method of Claim 5 wherein the surfactant is a methyl naphthalene sulfonic acid or salts thereof.

9. The method of Claim 5 wherein the aqueous solution contains phosphoric acid.

10. The method of Claim 5 wherein the meat-producing carcass is a poultry carcass.

11. A method of controlling Salmonella during processing of a poultry carcass comprising contacting the carcass for an effective amount of time with an aqueous solution at a pH below about 4 and at a temperature from about 0 to about 60°C, said solution comprising phosphoric acid and from 50 to about 400 parts per million of a surfactant selected from the group consisting of

12. A method of reducing the contamination of Salmonella or other skin attaching and colonizing bacteria on a meat-producing carcass comprising immersing the carcass in an aqueous bath containing an effective antimicrobial agent through which ultrasonic waves move.

13. A method of reducing the contamination of Salmonella on a meat-producing carcass comprising immersing the carcass in an aqueous bath containing an effective antimicrobial anionic surfactant through which ultrasonics waves move.

14. The method of Claim 12 wherein the meat-producing carcass is poultry.

15. The method of Claim 14 wherein the poultry is chicken.

16. The method of Claim 13 wherein the meat-producing carcass is poultry.

17. The method of Claim 16 wherein the meat-producing carcass is chicken.

18. The method of Claim 12 wherein the bath has an acidic pH and contains an effective anionic surfactant.

19. The method of Claim 13 wherein the bath has an acidic pH.

20. A method of reducing the contamination of Salmonella from the skin of a chicken carcass comprising immersing a chicken carcass that has been defeathered and eviscerated in an aqueous bath having a pH below about 4, containing an effective amount of anionic surfactant selected from the group consisting of alkyl sulfates, alkylbenzenesulfonic acids, alkylnaphthalenesulfonic acids and water soluble salts thereof and through which ultrasonic waves move.

21. A method of reducing the contamination of Salmonella from the skin of a chicken carcass comprising immersing a chicken carcass that has been defeathered and eviscerated in an aqueous bath having phosphoric acid therein in an amount to provide a pH of below about 4 and containing an effective amount of an anionic surfactant selected from the group consisting of alkyl sulfates, alkylbenzene sulfonic acids, alkylnaphthalene sulfonic acids and water soluble salts thereof and through which bath ultrasonic waves move.

22. The process of Claim 15 wherein the anionic surfactant consists chiefly of lauryl sulfate or a water soluble salt of lauryl sulfate.

23. The process of Claim 17 wherein the anionic surfactant is sodium lauryl sulfate.

24. The process of Claim 17 wherein the anionic surfactant is dodecylbenzene sulfonic acid or a water soluble salt thereof.

25. The process of Claim 17 wherein the anionic surfactant is the sodium salt of dodecylbenzenesulfonic acid.

26. In a process for processing chicken carcasses having skin areas contaminated with attached Salmonella wherein the carcasses are scalded, picked, eviscerated, washed and chilled, the improvement characterized by moving in a continuous fashion a plurality of such chicken carcasses through a tank containing an aqueous acidic solution of an effective antimicrobial agent and having at least one ultrasonic transducer to propagate ultrasonic waves in contacting relation with the said chicken carcasses at an energy level sufficient to cause the Salmonella to be at least partially displaced from skin areas of the carcasses and killed.

27. The process of Claim 26 wherein the pH of the aqueous medium is below about 4.

28. The process of Claim 26 wherein phosphoric acid has been added to the aqueous solution to maintain the aqueous medium at a pH of below about 4.

29. The process of Claim 26 wherein the aqueous solution contains an effective amount of an anionic surfactant selected from the group consisting of alkyl sulfate, alkylbenzenesulfonic acid, alkylnaphthalenesulfonic acid and water soluble salts thereof.

30. The process of Claim 29 wherein the anionic surfactant is lauryl sulfate or a water soluble salt of lauryl sulfate.

31. The process of Claim 29 wherein the anionic surfactant is dodecylbenzene sulfonic acid or a water soluble salt thereof.

32. The process of Claim 26 wherein the aqueous bath contains an effective amount of an anionic surfactant selected from the group consisting of a $C_8$-$C_{18}$ alkyl sulfate, a benzenesulfonic acid having at least one $C_1$-$C_{15}$ alkyl substituent, a naphthalenesulfonic acid having at least one $C_1$-$C_{15}$ alkyl substitutent, and water soluble salts thereof.

33. The process of Claim 14 wherein the antimicrobial agent is chlorine.

34. The process of Claim 14 wherein the antimicrobial agent is acetic acid.

EP 0 312 519 A2

FIG. 1

FIG. 2

## FIG. 3.

SCALDING → PICKING → EVISCERATING → SONICATION → WASHING → CHILLING →

→ SHIPPING →

## FIG. 4.

EP 0 312 519 A2